# EUROPEAN PATENT APPLICATION

(11) **EP 4 060 573 A1**
(43) Date of publication of application: **21.09.2022**
(21) Application number: 21382212.5
(22) Date of filing: 17.03.2021
(51) Int. Cl.: G06Q 10/04, G06Q 10/00, G06Q 50/28, B65F 5/00

(54) **METHOD FOR SMART CONTROL OF WASTE COLLECTION IN AN AUTOMATED WASTE COLLECTION PLANT**

(71) Applicant: URBAN REFUSE DEVELOPMENT, SLU, 25003 Lleida (ES); Universitat de Lleida, 25003 Lérida (ES)
(72) Inventor: FARRÉ CABANILLAS, Josep Anton, 25310 Agramunt (ES); FERNÁNDEZ CAMON, César, 25193 Lleida (ES); MATEU PIÑOL, Carlos, 25001 Lleida (ES)
(74) Representative: Juncosa Miró, Jaime

(57) **Abstract**

The present invention relates to a method for the intelligent control of waste collection in an automated waste collection plant. Said method comprises storing operating information of automated waste collection plants; providing a simulated model of a specific plant by calculating a first prediction model of the energy consumption of emptying cycles of the dropboxes of the specific plant by means of a first algorithm; training a virtual agent by means of a second algorithm which evaluates the energy consumption of actions of the specific plant in response to an occupation state in dropboxes, from the simulated model; the virtual agent receiving, in real time, information relating to the capacity state of the dropboxes of a real plant and establishing decision-making policies of said real plant based on the received information and on actions considered optimal during training; operating the real plant according to the decision-making policies.

## Description

### FIELD OF THE INVENTION

The present invention generally relates to waste collection methods and systems. In particular, the invention relates to a computer-implemented method for the intelligent control of waste collection in an automated waste collection plant.

### BACKGROUND OF THE INVENTION

In general, an automated waste collection plant (or system/facility) normally uses air suction by means of a vacuum system in a closed network of underground pipes, covering an area of a few square kilometers, for conveying the waste from delivery points, which comprise dropboxes, distributed for example in one part or all over a city, to a central collection point, reducing greenhouse gas emissions and the drawbacks of conventional methods (smells, noise, etc.), in addition to allowing the waste to be better reused and recycled.

From a plant operation viewpoint, automated waste collection plants today are generally rather inefficient in terms of energy and on an economic level mainly due to the fact that waste collection or removal is neither adapted to plant occupation levels nor to the energy cost during collection.

Likewise, to enable modeling and controlling an automated waste collection plant correctly, precise knowledge of the different parts of said plant is required.

The emergence and evolution of automatic learning-based artificial intelligence techniques has made it possible to approach such modeling and control.

For example, patent application EP2666737A1, belonging to the same inventors as the present invention, provides a method for the removal of waste in an automated waste collection plant where automatic learning techniques or algorithms are used for the planning operations of plants. The objective is to achieve optimal operation plans, at any time, based on the current state of the different parts of the plants and on previous experiences, which minimize energy consumption subject to pre-established service quality standards. Although this method has been proven to be efficient, there is still room for reducing energy consumption, and also the cost, involved with the operation of these plants.

Therefore, new methods for the intelligent control of waste collection in an automated waste collection plant are required.

### DESCRIPTION OF THE INVENTION

For this purpose, embodiments of the present invention provide a computer-implemented method for the intelligent control of waste collection in an automated waste collection plant. The proposed method comprises storing, in a memory or database, operating information of a plurality of automated waste collection plants, wherein the operating information includes, for each of the emptying cycles of each plant: the number of dropboxes/containers of the plant being emptied, the distance from the emptied dropboxes to a collection center (or central collection point), the type of waste, the volume of the waste, and the time instant in which the emptying cycle takes place.

The method also comprises a processing unit providing a simulated model of at least one specific automated waste collection plant, wherein the simulated model comprises calculating a first prediction model of the energy consumption of emptying cycles of one or more dropboxes of the specific automated waste collection plant, which is at least one in number, by means of running a first artificial intelligence algorithm on at least part of the operating information stored in the memory or database; and a processing unit training a virtual agent by means of running a second artificial intelligence algorithm which evaluates the energy consumption of a series of actions of the specific automated waste collection plant which are determining factors of emptying cycles, in response to a series of waste occupation situations in the dropboxes of the specific automated waste collection plant, from the simulated model.

The method also comprises receiving, by the virtual agent, in real time, information relating to a capacity state of the dropboxes of a real automated waste collection plant, and the virtual agent establishing one or more emptying control decision-making policies of the real automated waste collection plant based on the received information and on actions considered optimal during the training. Lastly, the real automated waste collection plant is operated according to the mentioned emptying control decision-making policy/policies established by the virtual agent.

In one embodiment, the calculation of the simulated model further includes calculating a second prediction model of the time each emptying cycle takes, particularly by means of running a third artificial intelligence algorithm on at least part of the operating information stored in the memory or database.

The first and third artificial intelligence algorithms particularly comprise a deep learning-based neural network. Likewise, the second artificial intelligence algorithm comprises a deep reinforcement learning-based neural network.

In one embodiment, the operating step is performed by a controller device operatively connected to each of the dropboxes of the real waste collection plant, after having received the control decision from the virtual agent.

In one embodiment, prior to the step of operating the real waste collection plant according to the mentioned emptying control decision-making policy/policies established by the virtual agent, it is verified from information relating to the capacity state of the dropboxes of the real waste collection plant if the emptying control decision-making policy/policies adopted is/are determining factor(s) of a real energy consumption optimization.

According to the proposed method, the mentioned emptying control decision-making policy/policies may comprise: emptying one or more of the dropboxes of the real waste collection plant; activating or deactivating vacuum-based emptying systems for emptying the dropboxes; and/or increasing or reducing the speed of vacuum-based emptying systems for emptying the dropboxes, among others.

The specific waste collection plant may comprise a single waste collection plant, or alternatively a virtual waste collection plant which compiles operating information of a plurality of real waste collection plants.

Other embodiments of the invention disclosed herein also include computer program products for performing the steps and operations performed by the proposed method. More particularly, a computer program product is an embodiment having a computer-readable medium including code instructions encoded therein which, when run in at least one processor of the computer system, cause the processor to perform the operations indicated herein as embodiments of the invention.

### BRIEF DESCRIPTION OF THE DRAWINGS

The foregoing and other features and advantages will be better understood from the following merely illustrative and non-limiting detailed description of embodiments in reference to the attached drawings, in which:
Fig. 1 is a flowchart illustrating a method for the intelligent control of waste collection in an automated waste collection plant, according to one embodiment of the present invention.
Fig. 2 schematically illustrates the architecture of a system for the intelligent control of waste collection, according to one embodiment of the present invention.

### DETAILED DESCRIPTION OF THE INVENTION

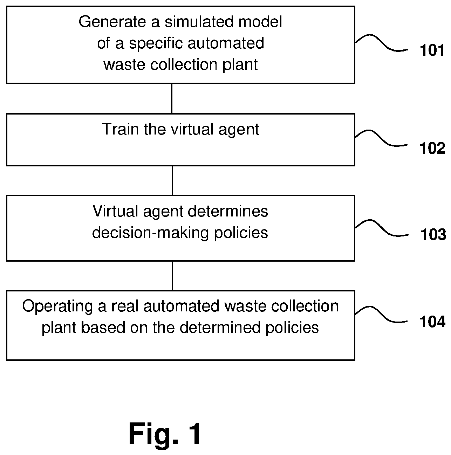

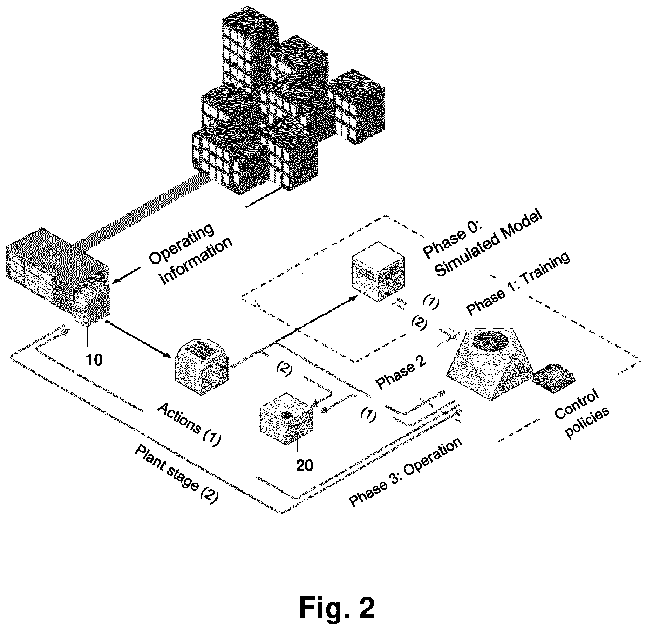

In reference to Figs. 1 and 2, an embodiment of the proposed method is shown therein. According to this embodiment, in step 101 (or phase 0), the method comprises generating a simulated model of a specific automated waste collection plant (or simply collection plant), for example a specific waste collection plant or a fictitious waste collection plant programmed/configured for acquiring operating information of a series of real waste collection plants.

For generating the simulated model, a processing unit calculates a first prediction model of the energy consumption of the emptying cycles of the dropboxes (i.e., high-speed startup operation, plus the emptying of a series of dropboxes, plus transport to the central collection point) of the specific collection plant by means of implementing a first artificial intelligence algorithm, for example a deep learning-based neural network, on at least part of the operating information of a plurality of collection plants that is stored in a memory or database.

The operating information can comprise, for each of the emptying cycles of each collection plant: the number of dropboxes of the collection plant being emptied, the distance from the emptied dropboxes to a collection center, the type of waste, the volume of the waste, the time instant in which the emptying cycle takes place, etc.

Continuing with the explanation of Fig. 1, once the simulated model capable of indicating the energy consumption of an emptying cycle has been generated, in step 102 (or phase 1), the method comprises training a virtual agent (i.e. software) by means of implementing a second artificial intelligence algorithm. Particularly, the training of the virtual agent is performed using the previously generated simulated model. To that end, the second algorithm, such as a deep reinforcement learning-based neural network, calculates the energy consumption of a series of actions of the specific collection plant which are determining factors of emptying cycles, in response to a plurality of waste occupation situations in the dropboxes of the specific collection plant. In other words, the result of the training is a policy which, given the state of a collection plant (capacity level or state of the dropboxes), and optionally the remaining variables defining the environment, provides a list of dropboxes to be emptied in the next emptying cycle.

In step 103 (or phase 2), the previously trained virtual agent receives, in real time, information relating to a capacity state of the dropboxes of a real collection plant (i.e. a collection plant to be controlled) and establishes one or more emptying control decision-making policies of said real plant taking into consideration the received information and actions considered optimal during training. In one embodiment, information relating to the capacity state of the dropboxes of the real collection plant is received, particularly, via a controller device 10, such as a PLC, installed at the real collection plant and operatively connected to each of the dropboxes of the real collection plant.

Lastly, in step 104 (or phase 3), the method comprises operating the real collection plant according to the mentioned one or more emptying control decision-making policies established by the virtual agent. In particular, this final operating step is also performed by the controller device 10. In any event, it should be noted that in other embodiments, the operating step could be performed by a computer or PC, among other computing systems.

Likewise, particularly, step 104 is performed once a sufficient time interval in which the virtual agent has not established any incorrect control decision-making policy has passed.

In the present invention, the controller device 10 and the virtual agent may operate in parallel. In other words, while the controller device 10 operates the real collection plant, the virtual agent simultaneously receives information about the state of the dropboxes and makes the corresponding decisions. The virtual agent thereby improves continuously throughout the operation time of the real collection plant.

In one embodiment, these decisions are not directly taken into consideration by the controller device 10, but rather said decisions are previously sent to a monitoring and telemetry system 20 for validation. In other examples, the controller device 10 receives the decisions directly from the virtual agent. In any case, the virtual agent may act as a supervisor to avoid mistaken operating actions in the real collection plant.

In some embodiments, the calculation of the simulated model also comprises implementing a third artificial intelligence algorithm on at least part of the operating information stored in the memory or database for calculating a second prediction model of the time each emptying cycle takes. Additional variables, such as the price of the energy (based on the time), temporal data (day of the week, etc.), time prediction if solar energy is used in the collection plant, etc., which allow even further optimizing the simulated model, are thereby taken into account.

Therefore, in the present invention the virtual agent is configured for observing one or more real collection plants to be controlled, as well as their environment (for example, the cost of energy, the time of the day on which waste collection takes place, etc.), such that the virtual agent can establish/provide the different decision-making control policies and perform actions that affect the environment of the mentioned collection plant(s), for example establishing emptying sequences, activating or deactivating vacuum-based emptying systems for emptying the dropboxes, increasing or reducing the speed of vacuum-based emptying systems, etc. The virtual agent is configured for performing the preceding actions hundreds or thousands of times taking different scenarios into consideration.

The proposed invention can be implemented in hardware, software, firmware, or any combination thereof. If it is implemented in software, the functions can be stored in or be encoded as one or more code instructions in a computer-readable medium.

The scope of the present invention is defined in the attached claims.

## Claims

1. A method for the intelligent control of waste collection in an automated waste collection plant, comprising:
storing operating information of a plurality of automated waste collection plants in a memory or database, wherein the operating information includes, for each of the emptying cycles of each plant: number of dropboxes of the plant being emptied, distance from the emptied dropboxes to a collection center, type of waste, volume of the waste, and time instant in which the emptying cycle takes place;
providing, by a processing unit, a simulated model of a specific automated waste collection plant, wherein the simulated model comprises calculating a first prediction model of the energy consumption of emptying cycles of one or more dropboxes of the specific automated waste collection plant, which is at least one, by means of running a first artificial intelligence algorithm on at least part of the operating information stored in the memory or database;
training, by a processing unit, a virtual agent by means of running a second artificial intelligence algorithm which evaluates the energy consumption of a series of actions of the specific automated waste collection plant of the simulated model, which are determining factors of emptying cycles, in response to a plurality of waste occupation situations in the dropboxes of the specific automated waste collection plant, from the simulated model;
receiving, by the virtual agent, in real time, information relating to a capacity state of the dropboxes of a real automated waste collection plant, and establishing, by the virtual agent, one or more emptying control decision-making policies of the real automated waste collection plant based on the received information and on actions considered optimal during the training of the virtual agent; and
operating the real automated waste collection plant according to said one or more emptying control decision-making policies established by the virtual agent.

2. The method according to claim 1, wherein the calculation of the simulated model further comprises calculating a second prediction model of the time each emptying cycle takes by means of running a third artificial intelligence algorithm on at least part of the operating information stored in the memory or database.

3. The method according to claim 1, wherein the first artificial intelligence algorithm comprises a deep learning-based neural network.

4. The method according to claim 2, wherein the third artificial intelligence algorithm comprises a deep learning-based neural network.

5. The method according to any one of the preceding claims, wherein the second artificial intelligence algorithm comprises a deep reinforcement learning-based neural network.

6. The method according to any one of the preceding claims, wherein the operating step is performed by a controller device, operatively connected to each of the dropboxes of the real automated waste collection plant, after having received the control decision from the virtual agent.

7. The method according to any one of the preceding claims, wherein said method comprises, prior to the step of operating the real automated waste collection plant according to said one or more emptying control decision-making policies established by the virtual agent, verifying, by a processing unit, from information relating to the capacity state of the dropboxes of the real automated waste collection plant if the emptying control decision-making policies adopted are determining factors of a real energy consumption optimization.

8. The method according to any one of the preceding claims, wherein said one or more emptying control decision-making policies comprise at least one of: emptying one or more of the dropboxes of the real automated waste collection plant; activating or deactivating vacuum-based emptying systems for emptying the dropboxes; and/or increasing or reducing the speed of vacuum-based emptying systems for emptying the dropboxes.

9. The method according to any one of the preceding claims, wherein the specific automated waste collection plant comprises a virtual automated waste collection plant which compiles operating information of a plurality of real waste collection plants.

10. A computer program product including code instructions which, when implemented in a computing system, implement a method according to any one of claims 1 to 9.
